Europäisches Patentamt

(19) European Patent Office

Office européen des brevets

(11) Publication number: **0 155 314**
**B1**

(12) **EUROPEAN PATENT SPECIFICATION**

(45) Date of publication of patent specification: **19.09.90**

(21) Application number: **84903513.4**

(22) Date of filing: **10.09.84**

(86) International application number:
**PCT/US84/01440**

(87) International publication number:
**WO 85/01242 28.03.85 Gazette 85/08**

(51) Int. Cl.⁵: **B 27 B 33/08**

(54) **SAW BLADE OR BLANK HAVING SELF PLUGGING STRESS RELIEF MEANS.**

(30) Priority: **09.09.83 US 531222**

(43) Date of publication of application:
**25.09.85 Bulletin 85/39**

(45) Publication of the grant of the patent:
**19.09.90 Bulletin 90/38**

(84) Designated Contracting States:
**AT BE CH DE FR GB LI LU NL SE**

(56) References cited:
**CH-A- 184 359**
**DE-A-3 232 778**
**US-A-1 711 102**
**US-A-2 013 943**
**US-A-3 981 216**
**US-A-4 240 315**

**IDR-INDUSTRIE DIAMANTEN RUNDSCHAU, vol. 17, January/March 1983, pages 37,38, Rheindruck GmbH, Düsseldorf, DE; H. MUMMENHOFF: "Stammblätter mit Spannungsausgleich und Geräuschminderung für Diamant-Trennscheiben."**

(73) Proprietor: **THE PEERLESS SAW COMPANY**
**4353 Directors Boulevard**
**Groveport, OH 43125 (US)**

(72) Inventor: **WITTKOPP, Connell, A.**
**876 Thayer Drive**
**Gahanna, OH 43238 (US)**

(74) Representative: **Beresford, Keith Denis Lewis et al**
**BERESFORD & Co. 2-5 Warwick Court High Holborn**
**London WC1R 5DJ (GB)**

Courier Press, Leamington Spa, England.

## Description

This invention relates to circular saw blade bodies.

DE-A1-3232778 and EP-A2-102626 published after the priority date of the present invention disclose a circular saw blade having stress relief slots terminating in spiral-form stress stops, the slots extending from the inner periphery of the blade.

The circular saw blade is well known. As known from for example US Patents 3981216, 2013943, 1711102 and Swiss Patent 184359, radial edge slots at the outer circumference of the blade have long been used to allow expansion in order to relieve thermal and other stresses. The slots also improve dynamic stability as the critical buckling speed of the saw increases. Slots have been conventionally machined into the blade during the manufacturing process. The slots of the US Patents end in stress relief holes. The conventional manufacturing steps for such blades include slot-cutting and drilling or punching. A problem with such blades is noise generated in use of the blades.

As disclosed in US Patent 3981216, a radial slot extending from the periphery of a saw blade terminates in a circular hole in the blade, which hole in turn may be plugged with a separate solid such as copper or another solid material of the same or different media. In this manner, the radial stresses created by a straight slot in the blade are considered to terminate and/or dissipate at the circular base hole at the end of the slot. The layout of the slots is arranged to reduce noise. In addition the plug inserted in the hole may reduce blade noise, but that further complicates manufacture.

While it is known that a rotating saw blade will create noise, conflicting reports exist regarding the effect of slots on radiated noise; and the basic noise mechanism associated with slots is yet to be scientifically understood. Similarly, it is known that slot configurations affect damping, noise, vibration, stability and tensioning of the saw blade while in use; however, the complex relationships and interrelationships of these parameters to various measures of saw performance and different saw geometries are likewise yet to be understood.

According to the present invention, there is provided a circular saw blade body including an inwardly directed stress-relieving slot cut from an outer circumference of the blade body and extending into the body to terminate in a stress stop between a blade eye and the outer circumference of the body, characterised in that the stress-stop is formed by cutting a substantially circularly-shaped slot of a relatively narrow substantially uniform width continuing from the termination of the stress-relieving slot.

Thus a blade body is provided in which a stress relief slot and stress stop are provided by a continuous slot and which provides noise suppression without the need for additional plugging.

For a better understanding of the present invention, reference will now be made, by way of example, to the accompanying drawings, in which:

Figure 1 shows a conventional "prior art" blade for purposes of comparison with Figure 2 which shows a saw blade in accord with the invention; and

Figure 2A shows a detail of the slot of the blade of Figure 2 and Figures 2B, 2C and 2D illustrate alternative slot configurations with respect to a blade or blade segment.

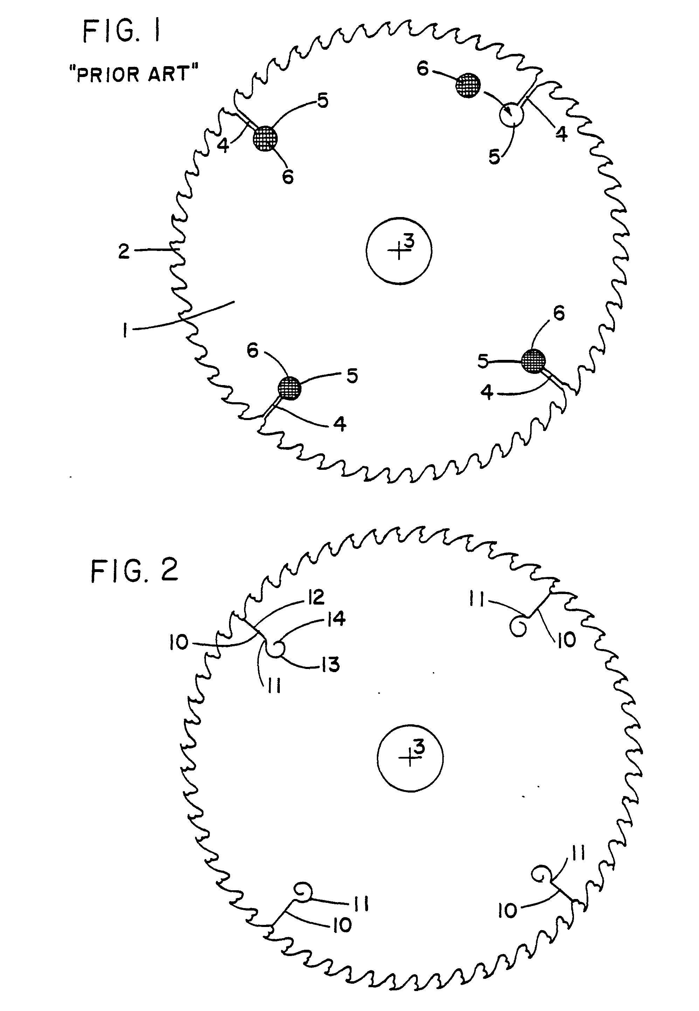

With reference to the blade of Figure 1, there is shown a circular metal disc 1 having a plurality of saw teeth 2 on the outer circumference thereof and a center mounting eye 3. In this conventional blade, a plurality of regularly spaced milled stress relief radial edge slots 4, are typically provided extending from the outer circumference of the blade inwardly towards the eye and terminating in a round base hole 5 between the blade eye and outer circumference. The base hole is separately plugged with material such as a copper plug 6 which can be permanently fitted into the hole. Multiple plugged slots are evenly distributed around the circumference, such as the four slots shown spaced at 90° separations on the saw blade. Other stress relief configurations varying the distribution, spacing, number and depth of slot are also possible. Similarly, while saw blades are made in many sizes, a representative dimension, for illustration purposes in connection with this application, for a blade 12 inches (nominal) in diameter includes a mounting eye hole of 0.625 inch, a slot width of 0.065 inch extending 1.062 inch radially into the blade, terminating in a copper plugged hole 0.25 inch in diameter. The appropriate depth of the slot into the radius of the blade from the outer edge and the corresponding diameter of the base relief hole are dependent upon blade diameter and suitable dimensions are known to those skilled in the art.

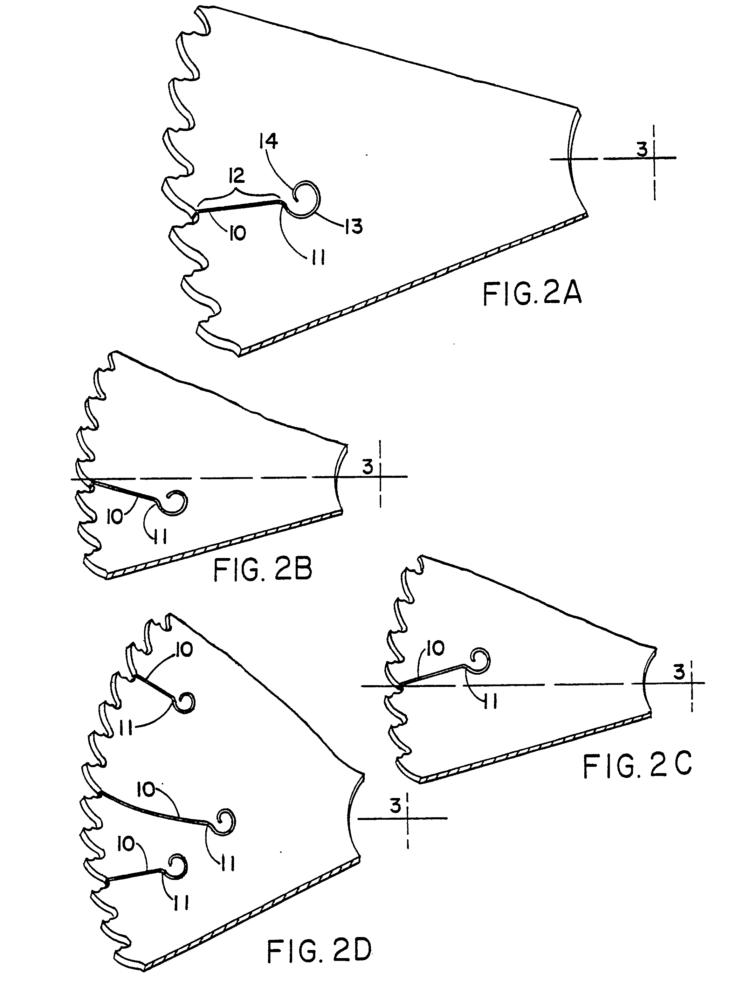

In contrast with the conventional blade shown in Figure 1, a blade of the invention is shown at Figure 2. The blade is essentially equivalent in utility and exhibits performance characteristics comparable to the blade of Figure 1, but includes a radial relief slot 10 which terminates in a further, "self-plugging," stress stop, 11. This saw blade is equivalent in performance to a conventionally machined blade having a linear stress relief slot, terminating in a base relief hole plugged with a separate material. In the example of Figure 2, a continuous cut of essentially uniform thickness is made through the blade, first in an extended radial line beginning at the outer circumference of the blade, portion 12 of the slot, and extending inwardly. At the end of the linear portion, the cut continues in an essentially circular cut portion 13 which terminates in an inward spiral segment 14 which has a considerably smaller radius of curvature than the first circular cut segment. In its most general description, the slot consists of a continuous, stress relieving, essentially radial cut through the thickness of the blade extending inwardly from the outer circumference of the blade and terminating in an intrinsic stress stop, which dissipates radial stresses induced by the slot and which also acts as a sound suppressant without the introduction of foreign material such as a plug into the body of the blade. In Figure 2 the intrinsic stress stop extends in a cut circular segment having a radius essentially beginning at the end of the inwardly extending linear radial slot and continues to an inwardly turning spiral which preferably terminates at a point along the directional line of the radial slot. While references are made to the "beginning" and "terminating" points of the continuous cut, it is evident that these terms are relative positions and it is apparent that a line "begins" or "terminates" at either end depending upon selection of a first reference point.

In the example for a 12 inch blade, the continuous self plugging slot includes a linear cut extending 1.062 inch from the circumference, at which point a nominal 0.25 inch diameter circular cut is begun, preferably after a radial turn in the line of cutting, and continued for approximately 270° before the inwardly turning spiral segment of reduced diameter (approximately .125 inch) continues another 180° to the termination of the cut, essentially at the center of the .25 inch diameter cut, and along the linear directional line of the straight radial cut. The width of the cut into the saw body is approximately .005—.006 inch. The continuous cut into the saw blade body may be made in various manners known to those of skill in the machine tool art, such as by a fine mechanical saw, EDM (electrical discharge machine) or suitably controlled industrial laser. Thus, a radial slot terminating in a spiral is provided. A figurative description of the slot shown in Figure 2 allows comparison of the self-plugging slot with the appearance of a question mark (?) extending into the blade.

The slot need not be exactly radial and may be either positively or negatively slanted with respect to a true blade radius. Other geometric configurations may also provide a stress relieving, self plugging slot and will be evident to those of skill in the art familiar with stress relief means used in conventional saws in view of the disclosure of this application. Thus, as shown in Figure 2B positive, or, as shown in Figure 2C, negative hook angles for the slot may be employed as shown in Figure 2D, the slot may be straight or curved; slots may be evenly or unevenly distributed around the circumference of the blade; and the depth of the slots extending from the circumference into the blade may similarly be equal or unequal with respect to multi-slotted blades; and differing numbers of slots per blade may be used. In instances of such configurations, the self-plugged stress relief slots of the invention will include an essentially continuous stress relief "slot", extending from the blade circumference which terminates in a separately configured "stress stop" in the body of the blade between the circumference and blade eye. Thus, a linear slot plus stress stop is provided. Both the slot and the stop are formed from the same continuous cut extending from the outer circumference of the blade, and the stop is not dependent upon the insertion of a plug or other foreign media for the purpose of noise suppression. In this regard, a stress stop having a curvilinear or circular segment provides a preferred stress stopping or dissipating means consistent with the geometric configuration of a continuous cut. In this connection, it is, however, apparent that the thickness of the continuous cut which combines a stress relief slot with a stress stop should be uniform and not exceed a dimension in which the structural integrity of the combination of the stress relief slot and stress stop, as provided by a continuous cut, is adversely affected.

The cut should be relatively narrow when compared to the dimensions of the slot and stop. In the blade of the example, the dimension of the width of the cut, approximately .005 inch, represents a minor proportion, 2%, of the diameter, .25 inch, of the beginning circular spiral segment, and a similar minor proportion, 4%, of the concluding inner segment of the spiral which is .125 inch in diameter. These proportions may vary, and are not by themselves critical; however, as a general rule the width of the self plugging cut should be of a thickness which is only a minor proportion of the circular spiral if in fact a spiral configuration is used. It should be evident to those of skill in the art that the term "minor" in the context of a particular saw blade will depend upon geometric proportions of the blade itself as well as of the configuration of the continuous cut which forms the stress relieved, self plugged slot. In a similar manner, a saw blade comprising an "unfinished" saw blank (i.e., unsharpened, or to which cutting teeth will be applied) is likewise an article of commerce to which the invention is applicable and which is not excluded from the scope of the claims.

**Claims**

1. A circular saw blade body (1) including an inwardly directed stress relieving slot (10) cut from an outer circumference of the blade body and extending into the body to terminate in a stress stop (11) between a blade eye (3) and the outer circumference of the body, characterised in that the stress stop (11) is formed by cutting a substantially circularly shaped slot (13) of a relatively narrow substantially uniform width continuing from the termination of the stress-relieving slot.

2. A body according to claim 1, in which the width of the continuous cut forming the stress relieving slot (10) and the stress-stop slot (13) is a minor proportion of the nominal diameter of stress-stop slot (13).

3. A body according to claim 1 or 2, wherein the tangent to stress-stop slot (13) at the junction thereof with the stress relieving slot (10) is inclined relative to the stress relieving slot.

4. A body according to any preceding claim, wherein the stress-stop slot (13) terminates in a portion (14) having a substantially spiral configuration within the portion of the body defined by the circle of the circularly shaped slot.

5. A body according to any preceding claim, wherein the stress-relieving slot (10) is straight and radial.

6. A body according to any preceding claim, wherein the stress-relieving slot (10) has a positive hook angle.

7. A body according to any of claims 1 to 5, wherein the stress-relieving slot (10) has a negative hook angle.

8. A body according to any preceding claim wherein a plurality of such stress-relieving slots (10) and respective stress-stop slots (13) are provided in the blade body.

9. A body according to claim 8 in which the stress-relieving slots (10) are equally spaced around the circumference of the blade.

10. A body according to claim 9 in which the stress-relieving slots (10) are unequally spaced around the circumference of the blade.

11. A body according to any of claims 8 to 10 in which the stress-relieving slots (10) are each of the same depth extending into the body of the blade from the circumference.

12. A body according to any of claims 8 to 10 in which stress-relieving slots (10) are of differing depths extending into the body of the blade from the circumference.

13. A body according to any preceding claim and having saw teeth formed at its periphery, the or each stress-relieving slot (10) extending into the body from the base section of a respective saw-tooth.

14. A body according to any preceding claim wherein the said width of the or each said stress-relieving slot (10) and stress-stop slot (13) is approximately 2 to 4 percent of the nominal diameter of the circularly shaped stress-stop slot (13).

15. A body according to any preceding claim which has no stress relieving slot or slots other than the or each slot beginning at the outer circumference thereof.

**Patentansprüche**

1. Kreisförmiger Sägeblattkörper (1) mit einem einwärts gerichteten Spannungsentlastungsschlitz (10), der von einem Außenumfang des Blattkörpers her eingeschnitten ist und sich in den Körper hinein erstreckt, um in einer Spannungs-Stoppeinrichtung (11) zwischen dem Blattauge (3) und dem Außenumfang des Körpers zu enden, dadurch gekennzeichnet, daß die Spannungs-Stoppeinrichtung (11) dadurch gebildet ist, daß man einen im wesentlichen kreisförmig geformten Schlitz (13) mit einer verhältnismäßig schmalen, im wesentlichen gleichförmigen Breite einschneidet, der eine Fortsetzung des Endes des Spannungsentlastungsschlitzes bildet.

2. Körper nach Anspruch 1, bei dem die Breite des durchgehenden Schlitzes, der den Spannungsentlastungsschlitz (10) bildet, und des Spannungs-Stoppschlitzes (13) ein nur kleiner Anteil des Nenn-Durchmessers des Spannungs-Stoppschlitzes (13) ist.

3. Körper nach Anspruch 1 oder 2, worin die Tangente des Spannungs-Stoppschlitzes (13) an seiner Verbindung mit dem Spannungsentlastungsschlitz (10) relativ zum Spannungsentlastungsschlitz geneigt ist.

4. Körper nach jedem vorangehenden Anspruch, worin der Spannungs-Stoppschlitz (13) in einem Abschnitt (14) endet, der eine im wesentlichen spiralige Ausbildung innerhalb jenes Abschnitts des Körpers aufweist, der durch den Kreis des kreisförmig geformten Schlitzes umrissen ist.

5. Körper nach jedem vorangehenden Anspruch, worin der Spannungsentlastungsschlitz (10) geradlinig und radial ist.

6. Körper nach jedem vorangehenden Anspruch, worin der Spannungsentlastungsschlitz (10) einen positiven Hakenwinkel aufweist.

7. Körper nach jedem der Ansprüche 1 bis 5, worin der Spannungsentlastungsschlitz (10) einen negativen Hakenwinkel aufweist.

8. Körper nach jedem vorangehenden Anspruch, worin eine Vielzahl solcher Spannungsentlastungsschlitze (10) und jeweiliger Spannungs-Stoppschlitze (13) im Blattkörper vorgesehen sind.

9. Körper nach Anspruch 8, worin die Spannungsentlastungsschlitze (10) mit gleichem Abstand rund um den Umfang des Blatts angeordnet sind.

10. Körper nach Anspruch 9, worin die Spannungsentlastungsschlitze (10) mit ungleichem Abstand rund um den Umfang des Blatts angeordnet sind.

11. Körper nach jedem der Ansprüche 8 bis 10, worin die Spannungsentlastungsschlitze (10) jeweils dieselbe Tiefe aufweisen, die sich in den Körper des Blatts vom Umfang her erstreckt.

12. Körper nach jedem der Ansprüche 8 bis 10, worin die Spannungsentlastungsschlitze (10) unterschiedliche Tiefe aufweisen, die sich in den Körper des Blatts vom Umfang her erstreckt.

13. Körper nach jedem vorangehenden Anspruch und mit Sägezähnen, die an seinem Umfang ausgebildet sind, wobei der oder jeder Spannungsentlastungsschlitz (10) sich in den Körper vom Basisabschnitt eines jeweiligen Sägezahns her erstreckt.

14. Körper nach jedem vorangehenden Anspruch, worin die genannte Breite des oder jedes Spannungsentlastungsschlitzes (10) und Spannungs-Stoppschlitzes (13) etwa 2 bis 4% des Nenn-Durchmessers des kreisförmig geformten Spannungs-Stoppschlitzes (13) beträgt.

15. Körper nach jedem vorangehenden Anspruch, der keinen bzw. keine anderen Spannungsentlastungsschlitz oder -schlitze aufweist als den oder jeden Schlitz, der an seinem Außenumfang beginnt.

## Revendications

1. Corps de lame de scie circulaire (1) comprenant une fente de soulagement de contrainte (10) dirigée vers l'intérieur, cette fente étant découpée à partir de la circonférence extérieure du corps de lame et pénétrant dans le corps de lame pour se terminer par une butée de contrainte (11) comprise entre un trou central (3) de la lame et la circonférence extérieure du corps de lame, corps caractérisé en ce que la butée de contrainte (11) est formée en découpant une fente de forme essentiellement circulaire (13) de largeur parfaitement uniforme relativement étroite dans le prolongement de l'extrémité de la fente de soulagement de contrainte.

2. Corps selon la revendication 1, caractérisé en ce que la largeur de la découpe continue formant la fente de soulagement de contrainte (10), et de la fente de butée de contrainte (13), ne représente qu'une proportion minime du diamètre nominal de la fente de butée de contrainte.

3. Corps selon l'une quelconque des revendications 1 et 2, caractérisé en ce que la tangente à la fente de butée de contrainte (13) à sa jonction avec la fente de soulagement de contrainte (10), est inclinée par rapport à la fente de soulagement de contrainte.

4. Corps selon l'une quelconque des revendications précédentes, caractérisé en ce que la fente de butée de contrainte (13) se termine par une partie (14) présentant une configuration sensiblement en forme de spirale à l'intérieur de la partie du corps définie par le cercle de la fente de forme circulaire.

5. Corps selon l'une quelconque des revendications précédentes, caractérisé en ce que la fente de soulagement de contrainte (10) est droite et radiale.

6. Corps selon l'une quelconque des revendications précédentes, caractérisé en ce que la fente de soulagement de contrainte (10) présente un angle de coude positif.

7. Corps selon l'une quelconque des revendications 1 à 5, caractérisé en ce que la fente de soulagement de contrainte (10) présente un angle de coude négatif.

8. Corps selon l'une quelconque des revendications précédentes, caractérisé en ce qu'un certain nombre des fentes de soulagement de contrainte (10) et des fentes de butée de contrainte respectives (13) sont formées dans le corps de lame.

9. Corps selon la revendication 8, caractérisé en ce que les fentes de soulagement de contrainte (10) sont également espacées autour de la circonférence de la lame.

10. Corps selon la revendication 9, caractérisé en ce que les fentes de soulagement de contrainte (10) sont inégalement espacées autour de la circonférence de la lame.

11. Corps selon l'une quelconque des revendications 8 à 10, caractérisé en ce que les fentes de soulagement de contrainte (10) pénètrent chacune de la même profondeur dans le corps de la lame à partir de la circonférence de celle-ci.

12. Corps selon l'une quelconque des revendications 8 à 10, caractérisé en ce que les fentes de soulagement de contrainte (10) pénètrent avec des profondeurs différentes dans le corps de la lame à partir de la circonférence de celle-ci.

13. Corps selon l'une quelconque des revendications précédentes, caractérisé en ce qu'il comporte des dents de scie à sa périphérie, et en ce que la fente ou chaque fente de soulagement de contrainte (10) pénètre dans le corps à partir de la section de base d'une dent de scie correspondante.

14. Corps selon l'une quelconque des revendications précédentes, caractérisé en ce que la largeur de la fente ou de chaque fente de soulagement de contrainte (10) et de la fente de butée de contrainte (13) représente environ 2 à 4% du diamètre nominal de la fente de butée de contrainte (13) de forme circulaire.

15. Corps selon l'une quelconque des revendications précédentes, caractérisé en ce qu'il ne comporte aucune autre fente de soulagement de contrainte que la fente ou chaque fente débutant à l'endroit de sa circonférence extérieure.

FIG. 1

"PRIOR ART"

FIG. 2

FIG.2A

FIG. 2B

FIG. 2C

FIG. 2D